# EUROPÄISCHE PATENTSCHRIFT

(11) **EP 1 717 821 B1**
(45) Veröffentlichungstag und Bekanntmachung des Hinweises auf die Patenterteilung: **28.09.2011**
(21) Anmeldenummer: 05290931.4
(22) Anmeldetag: 27.04.2005
(51) Int. Cl.: H01B 12/06

(54) **Supraleiterkabel**
Superconducting cable
Câble supraconducteur

(43) Veröffentlichungstag der Anmeldung: 02.11.2006
(73) Patentinhaber: Nexans, 75008 Paris (FR)
(72) Erfinder: Allais, Arnaud, Dr. Ing., 30625 Hannover (DE); Schmidt, Frank, 30855 Langenhagen (DE)
(74) Vertreter: Döring, Roger

(56) Entgegenhaltungen:
- WO-A-00/39813

## Beschreibung

Die Erfindung betrifft ein Supraleiterkabel nach dem Oberbegriff des Patentanspruchs 1.

Aus der WO 00/39813 ist ein Supraleiterkabel bekannt, welches aus einem rohrförmigen Träger besteht, auf welchen eine erste Lage aus supraleitfähigen Bändern aufgewickelt ist.

Die erste Lage ist von einem Dielektrikum umgeben, auf welches eine zweite Lage aus supraleitfähigen Bändern aufgewickelt ist.

Die supraleitfähigen Bänder sind innerhalb einer metallischen Schicht befindlich.

Bei diesem Supraleiterkabel dienen die erste Lage aus Hinleiter und die zweite Lage als Rückleiter. Hin- und Rückleiter verlaufen koaxial zueinander.

Auf der zweiten Lage befindet sich eine weitere Lage von Kupferstreifen, welche als Stabilisierung dienen für den Fall, daß die Kühlung des Kabels ausfallen bzw. ein Kurzschluß auftreten sollte. Die Kupferstreifen befinden sich in direktem Kontakt zu der metallischen Schicht, in welcher das Supraleitermaterial befindlich ist.

Mehrere von derartig aufgebauten Leitern befinden sich in einem Kryostaten, welcher die Supraleiter gegen Wärmeeinfall von außen isoliert.

Der Nachteil bei dieser Leiterkonstruktion besteht darin, daß durch den direkten Kontakt des Leiters aus supraleitfähigem Material mit dem Leiter aus normalleitendem Material und einer nicht optimierten Verseilung der verschiedenen Lagen Verluste im Kabel entstehen.

Der vorliegenden Erfindung liegt die Aufgabe zugrunde, einen Leiter für ein supraleitfähiges Kabel bereitzustellen, welcher gewährleistet, daß im Normalbetrieb der Strom hauptsächlich im supraleitfähigen Material fließt und der im normalleitendem Material fließende Strom weitestgehend verringert wird. Andererseits soll der Leiter aus normalleitendem Material in der Lage sein, im Fall eines Kurzschlusses oder im Falle des Überschreitens der Sprungtemperatur den gesamten Strom zu leiten.

Diese Aufgabe wird durch die im kennzeichnenden Teil des Patentanspruchs 1 aufgeführten Merkmale gelöst.

Durch die Erfindung wird erreicht, daß durch die Berücksichtigung der induktiven und ohmschen Widerstände eine vorteilhafte Stromverteilung in dem Kabel erzielt wird, so daß im Normalbetrieb der Strom hauptsächlich im supraleitfähigen Material fließt und sich im Falle einer mehrschichtigen Lage des supraleitfähigen Materials zwischen den Schichten optimal verteilt, während im Kurzschlußfall der Strom hauptsächlich von den Lagen aus normalleitendem Material getragen wird.

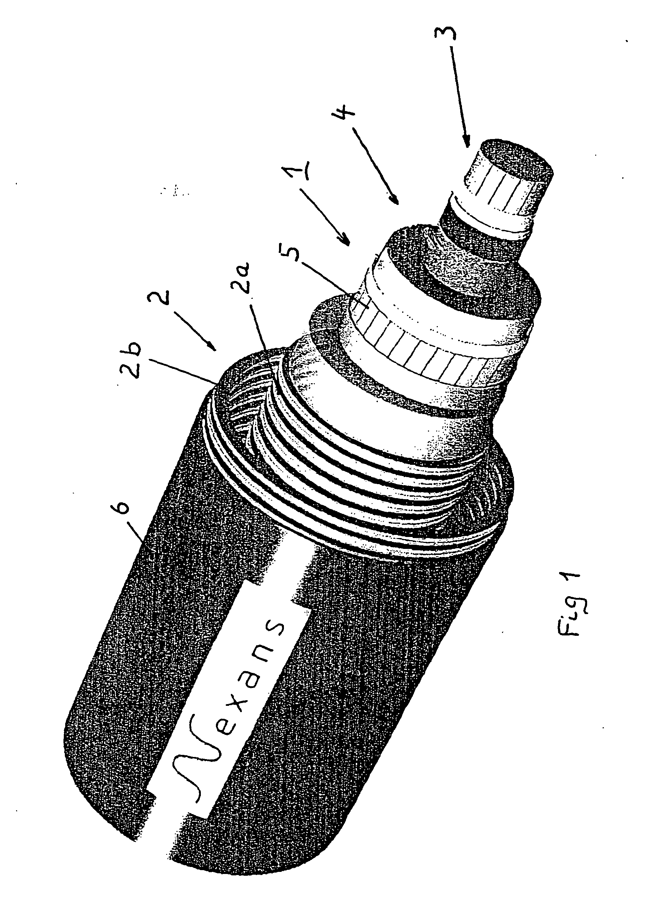

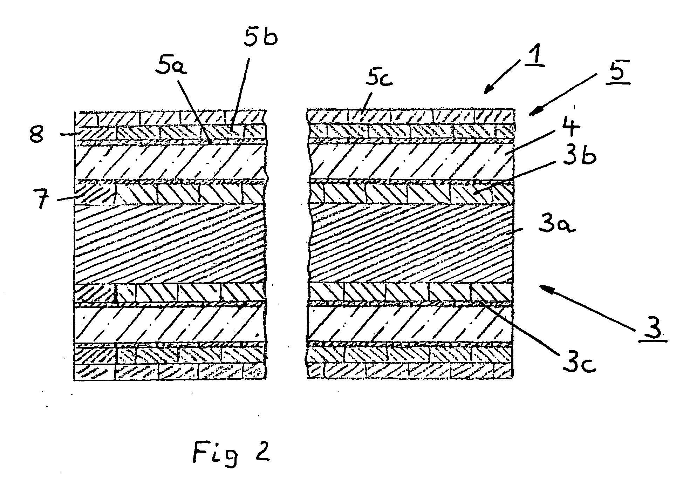

Die Erfindung ist anhand der in den Fig. 1 und 2 schematisch dargestellten Ausführungsbeispiele näher erläutert.

Die Figur 1 zeigt ein Supraleiterkabel, bestehend aus einer supraleitfähigen Kabelseele 1 sowie einem Kryostaten 2, in welchem die Kabelseele 1 angeordnet ist. Die Kabelseele 1 weist einen supraleitfähigen Leiter 3, eine Isolierschicht 4 sowie eine Abschirmung 5 auf.

Der Aufbau des supraleitfähigen Leiters 3 sowie der Abschirmung 5 wird anhand der Figur 2 näher erläutert.

Die Isolierschicht 4 besteht aus einer Vielzahl von Lagen aus bandförmigen Isolierwerkstoff, vorzugsweise aus Papier oder aus mit Polypropylen laminiertem Papier (PPLP).

Der Kryostat 2 besteht aus zwei konzentrisch zueinander angeordneten gewellten Metallrohren 2a, 2b, vorzugsweise aus nichtrostendem Stahl, die durch eine nicht näher dargestellte Abstandshalterung voneinander beabstandet sind. Der zwischen der Kabelseele 1 und dem inneren Wellrohr 2a sowie der zwischen den Wellrohren 2a und 2b befindliche Ringspalt dienen zum Transport des Kühlmediums.

Auf dem äußeren Wellrohr 2b befindet sich noch ein extrudierter Kunststoffmantel 6.

Drei gleichartige Supraleiterkabel bilden ein Stromübertragungssystem.

Die Figur 2 zeigt einen seitlichen Schnitt durch die Kabelseele 1.

Der Leiter 3 der Kabelseele 1 besteht aus einem Zentralelement 3a, welches als Rohr oder aber - wie in der Figur dargestellt - als Seil aus einer Vielzahl miteinander verseilter Kupferdrähte besteht. Mit besonderem Vorteil besteht das Zentralelement aus einer oder mehreren Lagen verseilter normalleitender Drähte.

Auf dem Zentralelement 3a befindet sich eine Schicht 3b aus einem dielektrischen oder halbleitendem Material. Die Schicht 3b besteht aus mehreren Lagen aus Papier oder Karbonpapier.

Auf der Schicht 3b befindet sich zumindest eine Lage 3c aus supraleitfähigen Drähten oder Bändern, die nebeneinander liegend auf die Schicht 3b aufgeseilt sind. Die Schlaglänge der supraleitfähigen Drähte oder Bänder der Lage 3c ist größer als 3D₁, wobei D₁ der Außendurchmesser der Schicht 3b ist.

An den Enden des Leiters 3 ist das Zentralelement 3a mit der Lage 3c aus supraleitfähigem Material mit je einem Verbindungsteil 7 verbunden. Die Verbindungsteile 7 sind vorzugsweise als Kupferringe ausgebildet, welche sowohl mit dem Zentralelement 3a als auch mit den Drähten oder Bändern der Lage 3c verlötet sind.

Über der Lage 3c befindet sich die Isolierschicht 4, die aus einer Vielzahl von einzelnen Lagen aus Bändern aus mit Polypropylen beschichtetem Papier bestehen.

Auf der Isolierschicht 4 befindet sich die Abschirmung 5, welche aus einer ersten Lage 5a aus supraleitendem Material besteht. Die Lage 5a ist ähnlich der Lage 3c des Leiters 3 aufgebaut. Die Schlaglänge der Drähte oder Bänder der Lage 5a ist größer als 3D₂, wobei D₂ der Außendurchmesser der Isolierschicht 4 ist.

Über der Lage 5a ist eine Schicht 5b, die wie die Schicht 3b des Leiters 3 aufgebaut ist.

Auf der Schicht 5b liegt eine Lage 5c aus normalleitendem Material. Die Lage 5c besteht vorteilhafterweise aus zumindest einem Band aus Kupfer, welches fest auf die Schicht 5b aufgewickelt ist. An den Enden der Abschirmung 5 sind die Lagen 5a und 5c durch Verbindungselemente 8 miteinander verbunden. Wie die Verbindungselemente 7 sind die Verbindungselemente 8 vorzugsweise als Kupferringe ausgebildet, die mit den Lagen 5a und 5c verlötet sind.

Mit besonderem Vorteil werden für die supraleitfähigen Lagen 3c und 5a bandförmige Drähte verwendet, auf deren Oberfläche oder in deren Inneren das supraleitfähige Material befindet ist. Das supraleitfähige Material ist eine Keramik, vorzugsweise auf der Basis von gemischten Oxiden von Kupfer, Barium und Yttrium (YBCO), Wismut, Blei, Strontium, Kalzium, Kupfer, Thallium und Quecksilber (BSCCO) oder ähnlichen Mischungen.

Die Schlagrichtung des Bandes bzw. der Bänder der Lage 5c ist größer als 3 D₂, wobei D₂ der Außendurchmesser der Isolierschicht 4 ist.

## Patentansprüche

1. Supraleiterkabel, bestehend aus einer supraleitfähigen Kabelseele (1) und einem die supraleitfähige Kabelseele (1) aufnehmenden Kryostaten (2), wobei die Kabelseele (1) aus einem suproleitfähigen Leiter (3), einer den supraleitfähigen Leiter (3) umgebenden Isolierung (4) und einer die Isolierung (4) umgebenden Abschirmung (5) besteht, **dadurch gekennzeichnet, daß** auf ein als Seil oder Rohr ausgebildetes Zentralelement (3a) aus dem normalleitenden Material eine Schicht (3b) aus einem dielektrischen oder halbleitenden Material aufgebracht ist, daß auf die Schicht (3b) aus einem dielektrischen oder halbleitenden Material eine Lage (3c) aus zumindest einem Draht oder Band aus supraleitfähigem Werkstoff schraubenlinienförmig aufgelegt ist und daß das Zentralelement (3a) und die Lage (3c) an den Enden der Kabelseele (1) elektrisch leitend miteinander verbunden sind.

2. Supraleiterkabel nach Anspruch 1, **dadurch gekennzeichnet, daß** die Schicht (3b) eine auf das Zentralelement (3a) aufgebrachte Schicht aus einem thermoplastischen Kunststoff oder Papier ist.

3. Supraleiterkabel nach Anspruch 2, **dadurch gekennzeichnet, daß** die Schicht (3b) aus mindestens einer schraubenlinienförmig auf den Leiter aufgebrachten Lage aus bandförmigem Material besteht.

4. Supraleiterkabel nach Anspruch 2 oder 3, **dadurch gekennzeichnet, daß** die Schicht (3b) aus einer oder mehreren Lagen aus mit Polypropylen laminiertem Papierband besteht.

5. Supraleiterkabel nach Anspruch 1, **dadurch gekennzeichnet, daß** die Schicht (3b) aus einer oder mehreren Lagen aus Karbonpapier besteht.

6. Supraleiterkabel nach Anspruch 1, **dadurch gekennzeichnet, daß** die Schicht (3b) Luft ist und zwischen dem Zentralelement (3a) und der Lage (3c) aus supraleitfähigem Material ein oder mehrere Abstandshalter aus dielektrischem Material angeordnet sind.

7. Supraleiterkabel nach einem der Ansprüche 1 bis 5, **dadurch gekennzeichnet, daß** die an jedem Ende der Kabelseele (1) vorgesehene elektrische Verbindung durch zumindest einen zwischen dem Zentralelement (3a) und der Lage (3c) vorgesehenen Ring (7) aus Kupfer hergestellt ist, der in elektrisch leitendem Kontakt zu dem Zentralelement (3a) und der Lage (3c) steht.

8. Supraleiterkabel nach Anspruch 7, **dadurch gekennzeichnet, daß** jeder Ring (7) sowohl mit dem Zentralelement (3a) als auch mit der Lage (3c) aus supraleitenden Material durch eine Lötverbindung verbunden ist.

9. Supraleiterkabel nach einem der Ansprüche 1 bis 8, **dadurch gekennzeichnet, daß** die Abschirmung (5) aus einer auf der Isolierschicht (4) aufliegenden ersten Lage (5a) aus supraleitfähigen Drähten oder Bändern, welche schraubenlinienförmig auf die Isolierschicht (4) aufgebracht ist, einer zweiten Lage (5c) aus zumindest einem Draht bzw. einem Band aus normalleitendem Material sowie einer zwischen der ersten Lage (5a) und der zweiten Lage (5c) befindlichen Schicht (5b) aus einem Dielektrikum oder aus einem halbleitenden Material besteht und daß die erste Lage (5a) und die zweite Lage (5c) an den Enden der Abschirmung (5) elektrisch miteinander verbunden sind.

10. Supraleiterkabel nach Anspruch 9, **dadurch gekennzeichnet, daß** die elektrische Verbindung durch zumindest einen zwischen den beiden Lagern (5a,5c) vorgesehenen Ring (8) aus Kupfer hergestellt ist, der in elektrisch leitendem Kontakt zu beiden Lagen (5a,5c) steht.

11. Supraleiterkabel noch Anspruch 10, **dadurch gekennzeichnet, daß** jeder Ring (8) sowohl mit der Lage (5a) aus supraleitendem Material als auch mit der Lage (5c) aus normalleitendem Material durch eine Lötverbindung verbunden ist.

12. Supraleiterkabel nach einem der Ansprüche 1 bis 11, **dadurch gekennzeichnet, daß** der zumindest eine Draht bzw. das zumindest eine Band der ersten Lage (3c) aus supraleitfähigen Material mit einer Schlaglänge auf die Schicht (3b) aus dielektrischen oder halbleitenden Material aufgebracht ist, welche größer als 3D₁ ist, wobei D₁ der Außendurchmesser der Schicht (3b) ist.

13. Supraleiterkabel nach einem der Ansprüche 1 bis 12, **dadurch gekennzeichnet, daß** der zumindest eine Draht bzw. das zumindest eine Band der ersten Lage (5a) der Abschirmung (5) mit einer Schlaglänge auf die Isolierung (4) aufgebracht ist, welche größer ist als 3D₂, wobei D₂ der Außendurchmesser der Isolierung (4) ist.

14. Supraleiterkabel nach einem der Ansprüche 1 bis 13, **dadurch gekennzeichnet, daß** die Schlaglängen der jeweiligen supraleitenden Lagen (3c,5a) und normalleitenden Lagen (3a,5c) unter Berücksichtigung der induktiven und resistiven Widerstandsanteile beim Betrieb des Supraleiterkabels mit Wechselstrom so gewählt sind, daß sich im Normalbetrieb eine Stromverteilung ergibt, bei welcher der Strom hauptsächlich in den supraleitenden Lagen (3c,5a) fließt und im Betriebsfall des Kurzschlußstroms eine Stromverteilung erbibt, bei welcher der Strom hauptsächlich in den Lagen (3a,5c) aus normalleitendem Material fließt.

## Claims

1. Superconductor cable, comprising a superconductive cable core (1) and a cryostat (2) enclosing the superconductive cable core (1), the cable core (1) comprising a super conductive conductor (3), an insulation (4) surrounding the superconductive conductor (3) and a shielding (5) surrounding the insula tio n (4), **characterized in that** a layer (3b) of a dielectric or a semiconducting material is applied to a central element (3a) formed from a normally conducting material as a strand or tube, that a layer(3c) of at least one wire or strip of superconductive material is placed helically onto the layer (3b) of a dielectric or semiconducting material and that the central element (3a) and the layer (3c) are connected to each other in an electrically conducting manneratthe endsofthe cable core (1).

2. Superconductor cable according to claim 1, **characterized in that** the layer (3b) is a layer of a thermoplastic material or paper applied to the central element (3a).

3. Superconductor cable according to claim 2, **characterized in that** the layer (3b) consists of at least one layer of material in strip form applied helically to the conductor.

4. Superconductor cable according to claim 2 or 3, **characterized in that** the layer (3b) comprises one or more layers of paper strip laminated with polypropylene.

5. Superconductor cable according to claim 1, **characterized in that** the layer (3b)consists of one or more layers of carbon paper.

6. Superconductor cable according to claim 1, **characterized in that** the layer (3b)isairand one or more spacers of dielectric material are arranged between the central element (3a) and the layer(3c) of superconductive material.

7. Superconductor cable according to one of the claims 1 to 5, **characterized in that** the electrical connection provided at each end of the cable core (1) is achieved by at least one ring (7) of copper, which is provided between the central element (3a) and the layer (3c) and is in electrically conducting contact with the central element(3a) and the layer(3c).

8. Superconductor cable according to claim 7, **characterized in that** each ring (7) is connected both to the central element (3a) and to the layer (3c) of superconducting material by a soldered connection.

9. Superconductor cable according to one of the claims 1 to 8, **characterized in that** the shielding (5) comprises a first layer (5a) of superconductive wires or strips lying on the insulating layer (4), which is applied helically to the insulating layer(4), a second layer(5c), consisting of at least one wire or strip of normally conducting material, and also a layer (5b) of a dielectric or of a semiconducting material located between the first layer(5a) and the second layer (5c), and that the first layer (5a) and the second layer (5c) are connected to each other in an electrically conducting manneratthe endsofthe shielding (5).

10. Superconductor cable according to claim 9, **characterized in that** the electrical connection is produced by at least one ring (8) of copper, which is provided between the two layers (5a, 5c) and is in electrically conducting contact with both layers (5a, 5c).

11. Superconductor cable according to claim 10, **characterized in that** each ring (8) is connected both to the layer (5a) of superconducting material and to the layer(5c) of normally conducting material by a soldered connection.

12. Superconductor cable according to one of the claims 1 to 11, **characterized in that** the at least one wire or the at least one strip of the first layer (3c) of superconductive material is applied to the layer (3b) of dielectric or semiconducting material with a length of lay which is greaterthan 3D₁, where D₁ is the outside diameter of the layer (3b).

13. Semiconductor cable according to one of the claims 1 to 12, **characterized in that** the at least one wire or the at least one strip of the first layer (5a) of the shielding (5) is applied to the insulation (4) with a length of lay which is greater than 3D₂, where D₂ is the outside diameter of the insulation (4).

14. Superconductor cable according to one of the claims 1 to 13, **characterized in that** the lengths of lay of the respective superconducting layers (3c, 5a) are chosen by considering of the inductive and resistive components of the impedance when the superconductor is operated with alternating current, in such a way that, during normal operation, a current distribution in which the current flow is primarily in the superconducting layers (3c, 5a) is obtained and, in the case of operation with a short-circuit current, a current distribution in which the current flows primarily in the layers (3a, 5c) of normally conducting material is obtained.

## Revendications

1. Câble supraconducteur, composé d'une âme de câble (1) à aptitude supraconductrice et d'un cryostat (2) qui accueille l'âme de câble (1) à aptitude supraconductrice, l'âme de câble (1) se composant d'un conducteur à aptitude supraconductrice (3), d'un isolant (4) qui entoure le conducteur à aptitude supraconductrice (3) et d'un blindage (5) qui entoure l'isolant (4), **caractérisé en ce qu'**une couche (3b) en un matériau diélectrique ou semi-conducteur est appliquée sur un élément central (3a) en matériau à conduction normale réalisé sous la forme d'un câble ou d'un tube, **en ce qu'**une couche (3c) composée d'au moins un fil ou une bande en matériau à aptitude supraconductrice est déposée en forme d'hélice sur la couche (3b) en un matériau diélectrique ou semi-conducteur et **en ce que** l'élément central (3a) et la couche (3c) sont reliées électriquement entre elles aux extrémités de l'âme de câble (1).

2. Câble supraconducteur selon la revendication 1, **caractérisé en ce que** la couche (3b) est une couche en un matériau thermoplastique ou en papier appliquée sur l'élément central (3a).

3. Câble supraconducteur selon la revendication 2, **caractérisé en ce que** la couche (3b) se compose d'au moins une couche de matériau en forme de bande appliquée sur le conducteur en forme d'hélice.

4. Câble supraconducteur selon la revendication 2 ou 3, **caractérisé en ce que** la couche (3b) se compose d'une ou plusieurs couches de bande de papier laminé avec du polypropylène.

5. Câble supraconducteur selon la revendication 1, **caractérisé en ce que** la couche (3b) se compose d'une ou plusieurs couches de papier carbone.

6. Câble supraconducteur selon la revendication 1, **caractérisé en ce que** la couche (3b) est de l'air et une ou plusieurs entretoises en matériau diélectrique sont disposées entre l'élément central (3a) et la couche (3c) en matériau à aptitude supraconductrice.

7. Câble supraconducteur selon l'une des revendications 1 à 5, **caractérisé en ce que** la liaison électrique prévue à chaque extrémité de l'âme de câble (1) est réalisée par au moins une bague (7) en cuivre prévue entre l'élément central (3a) et la couche (3c), laquelle est en contact électriquement conducteur avec l'élément central (3a) et la couche (3c).

8. Câble supraconducteur selon la revendication 7, **caractérisé en ce que** chaque bague (7) est reliée à la fois avec l'élément central (3a) et avec la couche (3c) en matériau supraconducteur par une connexion brasée.

9. Câble supraconducteur selon l'une des revendications 1 à 8, **caractérisé en ce que** le blindage (5) se compose d'une première couche (5a) de fils ou de bandes à aptitude supraconductrice reposant sur la couche isolante (4), laquelle est appliquée en forme d'hélice sur la couche isolante (4), d'une deuxième couche (5c) d'au moins un fil ou une bande en matériau à conduction normale ainsi que d'une couche (5b) en un diélectrique ou en un matériau semi-conducteur qui se trouve entre la première couche (5a) et la deuxième couche (5c), et **en ce que** la première couche (5a) et la deuxième couche (5c) sont reliées électriquement entre elles aux extrémités du blindage (5).

10. Câble supraconducteur selon la revendication 9, **caractérisé en ce que** la liaison électrique est réalisée par au moins une bague (8) en cuivre prévue entre les deux couches (5a, 5c), laquelle est en contact électriquement conducteur avec les deux couches (5a, 5c).

11. Câble supraconducteur selon la revendication 10, **caractérisé en ce que** chaque bague (8) est reliée à la fois avec la couche (5a) en matériau supraconducteur et avec la couche (5c) en matériau à conduction normale par une connexion brasée.

12. Câble supraconducteur selon l'une des revendications 1 à 11, **caractérisé en ce que** l'au moins un fil ou l'au moins une bande de la première couche (3c) en matériau à aptitude supraconductrice est appliqué(e) sur la couche (3b) en matériau diélectrique ou semi-conducteur avec un pas de câblage qui est supérieur à 3D₁, D₁ désignant ici le diamètre extérieur de la couche (3b).

13. Câble supraconducteur selon l'une des revendications 1 à 12, **caractérisé en ce que** l'au moins un fil ou l'au moins une bande de la première couche (5a) du blindage (5) est appliqué(e) sur l'isolant (4) avec un pas de câblage qui est supérieur à 3D₂, D₂ désignant ici le diamètre extérieur de l'isolant (4).

14. Câble supraconducteur selon l'une des revendications 1 à 13, **caractérisé en ce que** les pas de câblage des couches supraconductrices (3c, 5a) et des couches à conduction normale (3a, 5c) respectives sont choisis en tenant compte des composantes d'impédance inductives et résistives lors du fonctionnement du câble supraconducteur avec un courant alternatif, de telle sorte qu'en fonctionnement normal, il se produit une distribution du courant avec laquelle le courant circule principalement dans les couches supraconductrices (3c, 5a) et, dans le cas opérationnel d'un courant de court-circuit, il se produit une distribution du courant avec laquelle le courant circule principalement dans les couches (3a, 5c) en matériau à conduction normale.
